# EUROPEAN PATENT APPLICATION

(11) **EP 4 593 171 A1**
(43) Date of publication of application: **30.07.2025**
(21) Application number: 24215214.8
(22) Date of filing: 25.11.2024
(51) Int. Cl.: H01M 50/15, H01M 50/176, H01M 50/184, H01M 50/188, H01M 50/553

(54) **POWER STORAGE DEVICE AND METHOD OF MANUFACTURING THE POWER STORAGE DEVICE**

(30) Priority: 25.01.2024 JP 2024009576
(71) Applicant: Prime Planet Energy & Solutions, Inc., Chuo-ku, Tokyo 103-0022 (JP)
(72) Inventor: FUJIMURA, Satoshi, Tokyo, 103-0022 (JP)
(74) Representative: Kuhnen & Wacker Patent- und Rechtsanwaltsbüro PartG mbB

(57) **Abstract**

A power storage device (1) includes a case member (21) having an insertion hole (21h), a terminal member (40), and a resin member (60) that fixes the terminal member (40) to the case member (21). The terminal member (40) has a terminal top plate (43) and a terminal extension (53). The terminal member (40) and the resin member (60) are hermetically sealed only at a top plate roughened portion (47) that is formed in the shape of an encircling band on a top plate rear surface (45) of the terminal top plate (43) and is subjected to surface roughening. The case member (21) and the resin member (60) are hermetically sealed only at a case roughened portion that is formed in the shape of an encircling band on a case inner surface (24) of the case member (21) and is subjected to surface roughening.

## Description

### BACKGROUND

### Technical Field

The disclosure relates to a power storage device in which a terminal member is fixed via a resin member to a case member that constitutes a case, and also relates to a method of manufacturing the power storage device.

### Related Art

As a power storage device, a battery is known in which positive and negative terminal members are fixed via respective resin members to a case lid member (a case member) in the form of a rectangular plate that constitutes a case in the form of a rectangular parallelepiped box. More specifically, each of the positive and negative terminal members is inserted through an insertion hole formed in the case lid member. The resin member contacts the case lid member and the terminal member to fix the terminal member to the case lid member.

In the battery as described above, the entire contact surface of the case lid member contacting the resin member and the entire contact surface of the terminal member contacting the resin member may be subjected to surface roughening, respectively, and the resin member and the case lid member, and the resin member and the terminal member may be hermetically sealed over the entire areas of the respective contact surfaces. One example of the related art is described in the Patent Document 1.

### Related Art Documents

### Patent Documents

Patent Document 1: JP2011-2163 96A

### SUMMARY

### Technical Problems

However, when a cold-heat cycle test is conducted on the battery described above, cracking may occur and a seal between the resin member and the case lid member or terminal member may break. Thus, it has been found difficult to maintain good sealing performance of the resin member and the case lid member and that of the resin member and the terminal member for a long period of time.

The disclosure was made in view of the situation as described above, and provides a power storage device in which good sealing performance can be maintained between a resin member that fixes a terminal member to a case member and the case member and between the resin member and the terminal member, and a method of manufacturing the power storage device.

### Means of Solving the Problems

(1) One aspect of the disclosure for solving the above problem is a power storage device including a case member having an insertion hole, a terminal member inserted through the insertion hole of the case member, and a resin member that contacts the case member and the terminal member while insulating the case member and the terminal member from each other, to fix the terminal member to the case member, wherein the terminal member has a terminal top plate in the form of a plate located on the outside of the case member, and a terminal extension that extends from the terminal top plate toward the inside of the case member and passes through the insertion hole and the resin member, wherein the terminal top plate includes a top plate roughened portion that is formed in the shape of an encircling or endless band over the entire circumference of the terminal top plate on a top plate rear surface facing the case member side and is subjected to surface roughening, and the terminal member and the resin member are hermetically sealed only at the top plate roughened portion, and wherein the case member includes a case roughened portion that is formed in the shape of an encircling or endless band over the entire circumference of the insertion hole on a case inner surface facing the inside and is subjected to surface roughening, and the case member and the resin member are hermetically sealed only at the case roughened portion.

In the power storage device described above, the case member and the resin member are not hermetically sealed over the entire area of their contacting portion, but hermetically sealed only at the case roughened portion. Also, the terminal member and the resin member are not hermetically sealed over the entire area of their contacting portion, but hermetically sealed only at the top plate roughened portion. With this arrangement, it has been found that good sealing performance can be maintained between the case member and the resin member and between the terminal member and the resin member, respectively, compared to the case where the case member and the resin member are hermetically sealed over the entire area of their contacting portion, and the terminal member and the resin member are hermetically sealed over the entire area of their contacting portion.

The reason may be considered as follows. As compared with the case where the entire contacting portion of the case member and the resin member and the entire contacting portion of the terminal member and the resin member provide hermetic seals, the stress generated in the resin member during a cold-heat cycle test, for example, can be reduced when only the case roughened portion and only the top plate roughened portion provide hermetic seals. Furthermore, in the power storage device described above, since the case roughened portion and the top plate roughened portion are spaced apart from each other, the stress generated in a region of the resin member located between the case roughened portion and the top plate roughened portion is reduced. Thus, cracking is less likely or unlikely to occur in a seal portion of the case roughened portion and the resin member and a seal portion of the top plate roughened portion and the resin member, and good sealing performance can be maintained.

Examples of the "power storage device" include secondary batteries, such as a lithium-ion secondary battery, sodium-ion secondary battery, and a calcium-ion secondary battery, and capacitors, such as a lithium-ion capacitor.

(2) In the power storage device described in (1) above, case nanocolumns formed by joining particles derived from metal that forms the case member together like strings of beads into the form of columns and having a height of 50 nm or more may stand numerously on the case roughened portion, and terminal nanocolumns formed by joining particles derived from metal that forms the terminal member together like strings of beads into the form of columns and having a height of 50 nm or more may stand numerously on the top plate roughened portion. The resin member may be hermetically joined to the case roughened portion such that a resin material that forms the resin member fills gaps between the case nanocolumns standing numerously, and the resin member may be hermetically joined to the top plate roughened portion such that the resin material fills gaps between the terminal nanocolumns standing numerously.

In the power storage device described above, the case roughened portion of the case member is a nano-level (nano-order) roughened portion on which the case nanocolumns described above stand numerously, and the resin member is hermetically joined to the case roughened portion with the resin material filling gaps between the case nanocolumns standing numerously. Thus, the sealing performance and joining strength of the case member and the resin member can be made particularly high. Also, the top plate roughened portion of the terminal member is a nano-level roughened portion on which the terminal nanocolumns described above stand numerously, and the resin member is hermetically joined to the top plate roughened portion with the resin material filling gaps between the terminal nanocolumns standing numerously. Thus, the sealing performance and joining strength of the terminal member and the resin member can be made particularly high.

(3) Another aspect of the disclosure is a method of manufacturing a power storage device including a case member having an insertion hole, a terminal member inserted through the insertion hole of the case member, and a resin member that contacts the case member and the terminal member while insulating the case member and the terminal member from each other, to fix the terminal member to the case member, wherein the terminal member has a terminal top plate in the form of a plate located on the outside of the case member, and a terminal extension that extends from the terminal top plate toward the inside of the case member and passes through the insertion hole and the resin member, wherein the terminal top plate includes a top plate roughened portion that is formed in the shape of an encircling band over the entire circumference of the terminal top plate on a top plate rear surface facing the case member side and is subjected to surface roughening, and the terminal member and the resin member are hermetically sealed only at the top plate roughened portion, and wherein the case member includes a case roughened portion that is formed in the shape of an encircling band over the entire circumference of the insertion hole on a case inner surface facing the inside and is subjected to surface roughening, and the case member and the resin member are hermetically sealed only at the case roughened portion. The method includes a case roughening process of forming the case roughened portion by applying surface roughening to a case member before roughening, a terminal forming process of forming the terminal member by welding a top plate member that provides the terminal top plate and an extension member that provides the terminal extension together, a top plate roughening process of forming the top plate roughened portion by applying surface roughening to a top plate member before roughening before the terminal forming process, and a resin molding process of molding the resin member hermetically joined to the case roughened portion and the top plate roughened portion in a condition where the terminal member is inserted through the insertion hole of the case member.

In the method of manufacturing the power storage device described above, the top plate roughened portion is formed by applying surface roughening to the top plate member before the terminal member is formed by welding the top plate member and the extension member together. Thus, the terminal extension is not present during formation of the top plate roughened portion, and the top plate roughened portion can be easily formed without interfering with the terminal extension. Also, the case roughened portion is formed on the case member and the top plate roughened portion is formed on the terminal member prior to the resin molding process; therefore, the resin member hermetically joined to the case roughened portion and the top plate roughened portion due to the anchor effect can be easily molded in the resin molding process.

The "surface roughening" may be selected from, for example, physical surface roughening treatment, such as shot blasting, sand blasting, and metal spraying, chemical surface roughening treatment, such as anodization, and chemical etching, and surface roughening treatment to form nano-order projections and recesses through pulsed laser irradiation.

(4) The method of manufacturing the power storage device described in (3) above may further include a terminal inserting process of inserting the terminal member through the insertion hole of the case member after the terminal forming process and before the resin molding process.

In the method of manufacturing the power storage device described above, the terminal member is inserted through the insertion hole of the case member in the terminal inserting process after the terminal forming process, and the case member is not present during formation of the terminal member; therefore, the formation of the terminal member (welding of the top plate member and the extension member) can be easily carried out.

(5) In the method of manufacturing the power storage device described in (3) above, the extension member may have an inside-hole located portion located in the insertion hole of the case member and welded to the top plate member, and the terminal forming process may comprise a process of welding the inside-hole located portion and the top plate member in a condition where the inside-hole located portion of the extension member is placed in the insertion hole of the case member.

In the method of manufacturing the power storage device described above, in the terminal forming process, the terminal member is formed by welding the inside-hole located portion and the top plate member together in a condition where the inside-hole located portion of the extension member is placed in the insertion hole of the case member. In this manner, the formation of the terminal member and the insertion of the terminal member through the insertion hole can be carried out at the same time, and there is no need to carry out the process of inserting the terminal member through the insertion hole after the formation of the terminal member. In addition, the insertion hole can be designed to be small (it is possible to provide a small insertion hole through which the terminal member cannot be inserted after formation of the terminal member).

(6) In the method of manufacturing the power storage device described in any one of (3) to (5) above, case nanocolumns formed by joining particles derived from metal that forms the case member together like strings of beads into the form of columns and having a height of 50 nm or more may stand numerously on the case roughened portion, and terminal nanocolumns formed by joining particles derived from metal that forms the terminal member together like strings of beads into the form of columns and having a height of 50 nm or more may stand numerously on the top plate roughened portion. The resin member may be hermetically joined to the case roughened portion such that a resin material that forms the resin member fills gaps between the case nanocolumns standing numerously, and the resin member may be hermetically joined to the top plate roughened portion such that the resin material fills gaps between the terminal nanocolumns standing numerously. The case roughening process may comprise forming the case roughened portion on which the case nanocolumns stand numerously by intermittently applying a pulsed laser beam to the case member before roughening while shifting an irradiation position, and the top plate roughening process may comprise forming the top plate roughened portion on which the terminal nanocolumns stand numerously by intermittently applying a pulsed laser beam to the top plate member before roughening while shifting an irradiation position. The resin molding process may comprise molding the resin member while filling gaps between the case nanocolumns standing numerously on the case roughened portion with the resin material and filling gaps between the terminal nanocolumns standing numerously on the top plate roughened portion with the resin material.

In the method of manufacturing the power storage device described above, in the case roughening process, the case roughened portion on which the case nanocolumns stand numerously is formed by irradiating the case member before roughening with the pulsed laser beam as described above, so that the nano-level case roughened portion can be easily provided. Also, in the top plate roughening process, the top plate roughened portion on which the terminal nanocolumns stand numerously is formed by irradiating the top plate member before roughening with the pulsed laser beam as described above, so that the nano-level top plate roughened portion can be easily provided. Then, in the resin molding process, the resin member is molded with the resin material filling gaps between the case nanocolumns standing numerously on the case roughened portion and filling gaps between the terminal nanocolumns standing numerously on the top plate roughened portion. Thus, the sealing performance and joining strength of the resin member and the case member and those of the resin member and the terminal member can be made particularly high.

### BRIEF DESCRIPTION OF THE DRAWINGS

FIG. 1 is a perspective view of a battery according to one embodiment;
FIG. 2 is a partial cross-sectional view of the battery according to the embodiment, taken along the battery height direction and the battery width direction;
FIG. 3 is a cross-sectional view of a resin member and its vicinity of the battery according to the embodiment, taken along the battery height direction and the battery thickness direction;
FIG. 4 is an enlarged cross-sectional view according to the embodiment, showing an enlarged view of a seal portion of a case roughened portion (or a top plate roughened portion) and the resin member;
FIG. 5 is a flowchart of a method of manufacturing the battery according to the embodiment;
FIG. 6 is an explanatory view showing the manner of forming a plurality of bowl-shaped recesses and nanocolumns standing numerously on the bowl-shaped recesses through scanning with a pulsed laser beam, in connection with the method of manufacturing the battery according to the embodiment;
FIG. 7 is an explanatory view showing the manner of forming a terminal member by laser-welding a top plate member and an extension member, in connection with the method of manufacturing the battery according to the embodiment; and
FIG. 8 is a cross-sectional view corresponding to FIG. 3, showing a resin member and its vicinity according to a comparative example.

### DETAILED DESCRIPTION OF THE EXEMPLARY EMBODIMENTS

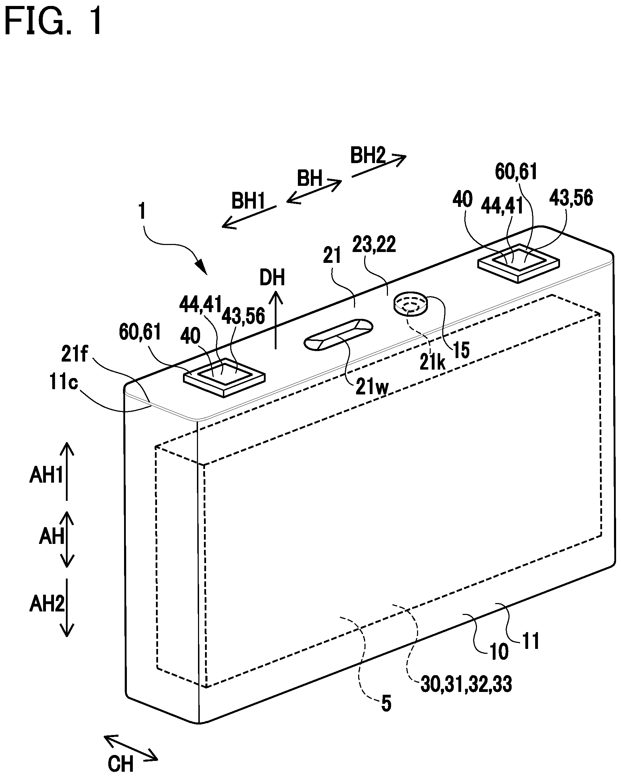

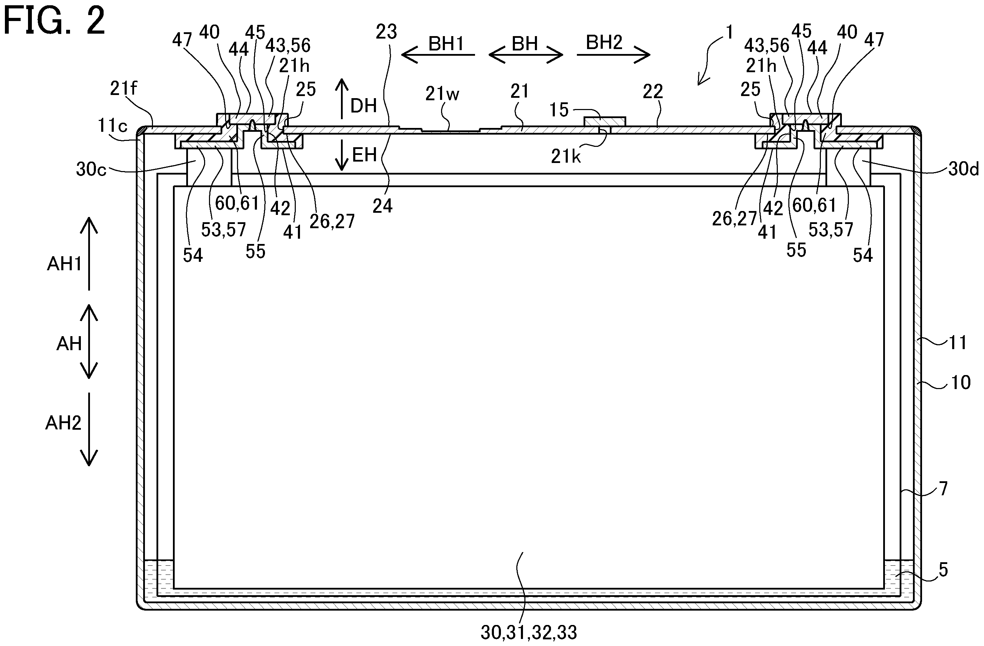

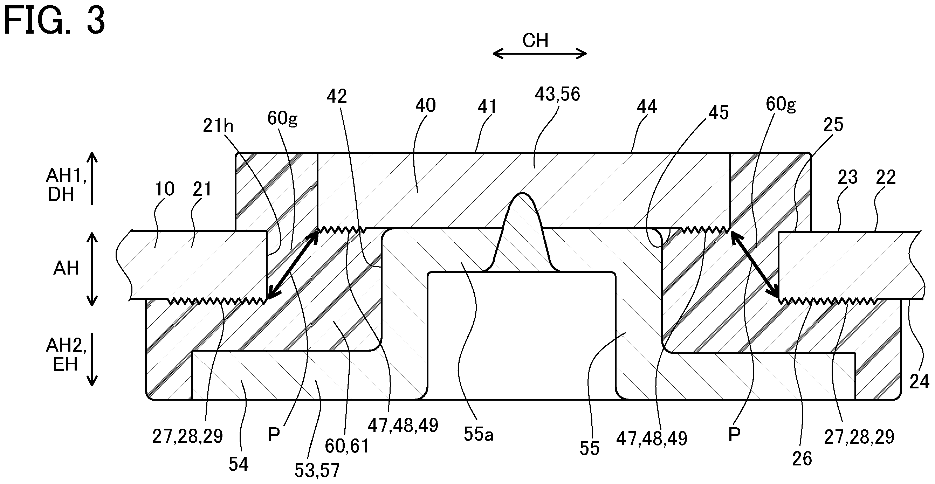

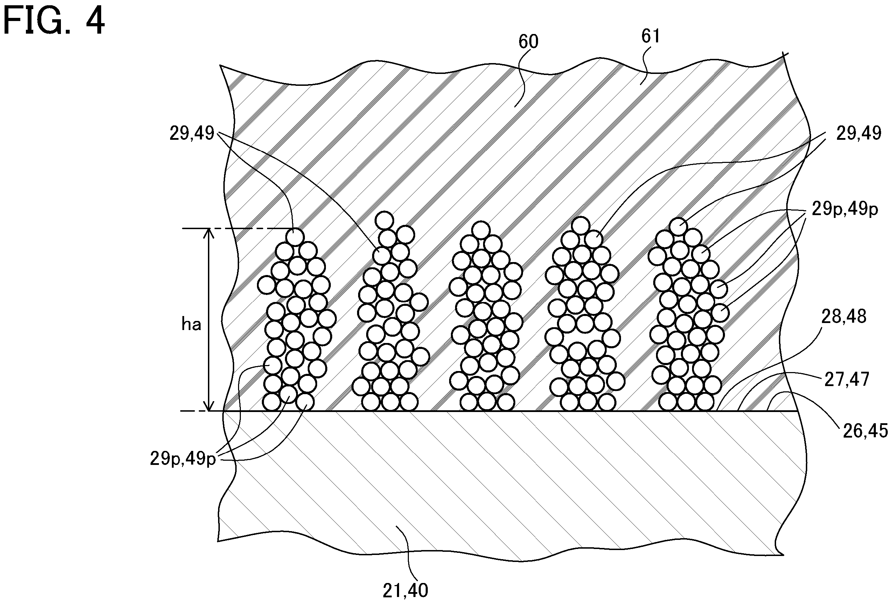

In the following, one embodiment of the disclosure will be described with reference to the drawings. FIG. 1 is a perspective view of a battery (one example of the power storage device of the disclosure) 1 according to the embodiment, and FIG. 2 is a partial cross-sectional view of the battery 1. FIG. 3 is a cross-sectional view of a resin member 60 and its vicinity of the battery 1. FIG. 4 is an enlarged cross-sectional view of a seal portion of a case roughened portion 27 (or a top plate roughened portion 47) and the resin member 60. In the following description, the battery height direction AH, battery width direction BH, and battery thickness direction CH of the battery 1 are defined as the directions indicated in FIG. 1 and FIG. 2.

The battery 1 is a sealed lithium-ion secondary battery of a rectangular (rectangular parallelepiped) shape, which is installed on a vehicle, such as a hybrid vehicle, plug-in hybrid vehicle, or an electric vehicle. The battery 1 consists of a case 10, an electrode body 30 and electrolyte 5 housed in the case 10, positive and negative terminal members 40 fixed to the case 10 via respective resin members 60, and so forth. The electrode body 30 is covered with an insulating holder 7 in the case 10. The insulating holder 7 is formed from an insulating film and shaped like a bag that opens to the upper side AH1 in the battery height direction AH.

The electrode body 30 is of a rectangular parallelepiped, stacked type, and has a plurality of rectangular positive electrode sheets 31 and a plurality of rectangular negative electrode sheets 32 alternately stacked in the battery thickness direction CH via rectangular separators 33 in the form of porous resin films. In the electrode body 30, on one side BH1 in the battery width direction BH, current collecting foils of the respective positive electrode sheets 31 extend to the upper side AH1 and are superposed in the battery thickness direction CH to form a positive current collector 30c. The positive current collector 30c is conductively connected to the terminal member 40 of the positive electrode. Also in the electrode body 30, on the other side BH2 in the battery width direction BH, current collecting foils of the respective negative electrode sheets 32 extend to the upper side AH1 and are superposed in the battery thickness direction CH to form a negative current collector 30d. The negative current collector 30d is conductively connected to the terminal member 40 of the negative electrode.

The case 10 is shaped like a rectangular parallelepiped box and made of metal (aluminum in this embodiment). The case 10 consists of a case body 11 and a case lid member 21. In this embodiment, the case lid member 21 corresponds to the "case member" mentioned above. The case body 11 is in the form of a rectangular tube with a bottom and a rectangular opening portion 11c and houses the electrode body 30 therein. The case lid member 21 is in the form of a rectangular plate having a case outer surface 23 that faces the outside DH of the case lid member 21 (the upper side AH1 in this embodiment) and a case inner surface 24 that faces the inside EH of the case lid member 21 (the lower side AH2 in the battery height direction AH in this embodiment), and closes the opening portion 11c of the case body 11. A peripheral portion 21f of the case lid member 21 and the opening portion 11c of the case body 11 are hermetically welded together over the entire circumference thereof. The case lid member 21 is provided with a safety valve 21w that fractures and opens when the internal pressure of the case 10 exceeds the valve opening pressure. The case lid member 21 is also provided with a liquid inlet 21k, and the liquid inlet 21k is hermetically sealed with a disc-shaped sealing member 15.

Rectangular insertion holes 21hs are respectively provided in portions of the case lid member 21 near its ends on one side BH1 and the other side BH2 in the battery width direction BH. The terminal member 40 of the positive electrode made of aluminum is inserted through the insertion hole 21h on the one side BH1, and the resin member 60 of the positive electrode contacts the case lid member 21 and the terminal member 40 while insulating the case lid member 21 and the terminal member 40 from each other, to fix the terminal member 40 to the case lid member 21. The terminal member 40 of the negative electrode made of copper is inserted through the insertion hole 21h on the other side BH2, and the resin member 60 of the negative electrode contacts the case lid member 21 and the terminal member 40 while insulating the case lid member 21 and the terminal member 40 from each other, to fix the terminal member 40 to the case lid member 21. The positive and negative terminal members 40 have substantially the same configuration, and the positive and negative resin members 60 have substantially the same configuration; therefore, they will be described collectively below.

Each terminal member 40 is formed by welding and integrating a top plate member 56 and an extension member 57 which will be described later, and has a terminal top plate 43 and a terminal extension 53. The terminal member 40 of the positive electrode is made of aluminum, and the terminal member 40 of the negative electrode is made of copper.

The terminal top plate 43 is in the form of a rectangular plate having a top plate top surface 44 that faces the outside DH (the upper side AH1) and a top plate rear surface 45 that faces the inside EH (the lower side AH2), and extends in the battery width direction BH and the battery thickness direction CH.

The terminal extension 53 extends from the terminal top plate 43 toward the inside EH (the lower side AH2) and passes through the insertion hole 21h and the resin member 60. Specifically, the terminal extension 53 consists of a plate-like main body portion 54, and an inside-hole located portion 55 that protrudes from the main body portion 54 to the upper side AH1 and is located in the insertion hole 21h. The main body portion 54 is in the form of a rectangular plate that is long in the battery width direction BH and is located on the inside EH (the lower side AH2) of the case lid member 21. On the other hand, the inside-hole located portion 55 has a bottomed cylindrical shape that is closed at the upper side AH1 and has an upper bottom portion 55a. The inside-hole located portion 55 extends from the main body portion 54 to the terminal top plate 43 through the insertion hole 21h such that the upper bottom portion 55a contacts the terminal top plate 43. The central portion of the upper bottom portion 55a is welded to the central portion of the terminal top plate 43. The main body portion 54 of the terminal extension 53 of the positive electrode is welded to the positive current collector 30c of the electrode body 30. On the other hand, the main body portion 54 of the terminal extension 53 of the negative electrode is welded to the negative current collector 30d of the electrode body 30.

Next, the relationship between the case lid member 21, terminal member 40, and the resin member 60 will be described. The resin member 60 contacts a hole surrounding portion 25 that is a part of a case surface 22 of the case lid member 21 and is located around the insertion hole 21h. The hole surrounding portion 25 has a hole surrounding inner portion 26 that faces the inside EH and is a part of the case inner surface 24 described above. The hole surrounding inner portion 26 has a rectangular encircling band-like shape or frame-like shape extending over the entire circumference of the insertion hole 21h. Furthermore, the hole surrounding inner portion 26 has a case roughened portion 27 that has a rectangular encircling band-like shape extending over the entire circumference of the insertion hole 21h and is subjected to surface roughening. In this embodiment, the entire hole surrounding inner portion 26 provides the case roughened portion 27.

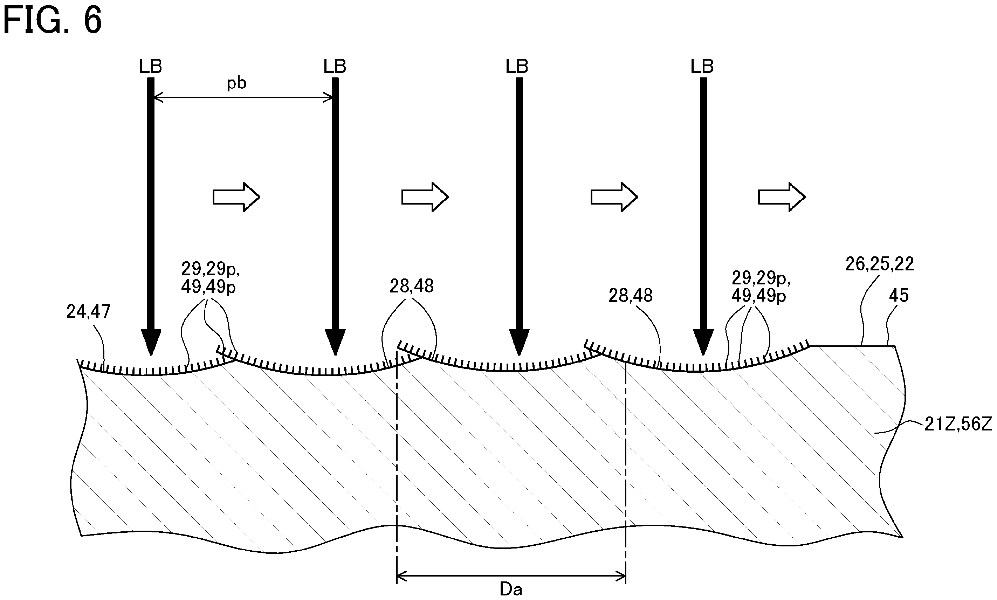

The case roughened portion 27 is a nano-level nano-roughened portion that is roughened with a pulsed laser beam LB that will be described later (see FIG. 6). Specifically, in the case roughened portion 27, numerous bowl-shaped recesses 28 that are dented in the shape of bowls or impact craters and have a diameter Da of 30 µm to 300 µm (the diameter Da is generally equal to 80 µm in this embodiment) are arranged while partially overlapping (see FIG. 6). Furthermore, on the bowl-shaped recesses 28, case nanocolumns 29 formed by joining particles 29p derived from metal that forms the case lid member 21 together like strings of beads into the form of columns and having a height ha of 50 nm or more (the height ha is generally equal to 200 nm in this embodiment) stand together in large numbers (see FIG. 4 and FIG. 6). The metal that forms the case lid member 21 is aluminum as described above, and the case nanocolumn 29 is made up of the particles 29p of aluminum and aluminum oxide. The case lid member 21 and the resin member 60 are hermetically sealed only at the case roughened portion 27, as described below.

The resin member 60 contacts a hole vicinity portion 42 that is a part of a terminal surface 41 of the terminal member 40 and is located in the vicinity of the insertion hole 21h. The hole vicinity portion 42 includes the top plate rear surface 45 described above. The top plate rear surface 45 has a top plate roughened portion 47 that has a rectangular encircling band-like shape extending over the entire circumference of the terminal top plate 43 and is subjected to surface roughening. In this embodiment, a peripheral portion of the top plate rear surface 45 provides the top plate roughened portion 47.

The top plate roughened portion 47 is a nano-level nano-roughened portion, like the case roughened portion 27 of the case lid member 21 described above. Specifically, numerous bowl-shaped recesses 48 are arranged in the top plate roughened portion 47 (see FIG. 6), and terminal nanocolumns 49 formed by joining particles 49p derived from metal that forms the terminal member 40 together like strings of beads into the form of columns and having a height ha of 50 nm or more (the height ha is generally equal to 200 nm in this embodiment) stand together in large numbers on each bowl-shaped recess 48 (see FIG. 4 and FIG. 6). The metal that forms the terminal member 40 of the positive electrode is aluminum as described above, and the terminal nanocolumn 49 of the positive electrode is made up of the particles 49p of aluminum and aluminum oxide. On the other hand, the metal that forms the terminal member 40 of the negative electrode is copper as described above, and the terminal nanocolumn 49 of the negative electrode is made up of the particles 49p of copper and copper oxide. The terminal member 40 and the resin member 60 are hermetically sealed only at the top plate roughened portion 47, as described below.

The resin member 60 is made of a thermoplastic resin material 61. The resin material 61 includes a thermoplastic main resin (polyphenylene sulfide (PPS) in this embodiment), a thermoplastic elastomer (thermoplastic polyurethane elastomer in this embodiment), and a filler (fibrous glass filler in this embodiment). The resin member 60 contacts the hole surrounding portion 25 of the case surface 22 of the case lid member 21 and also contacts the hole vicinity portion 42 of the terminal surface 41 of the terminal member 40, to fix the terminal member 40 to the case lid member 21.

Furthermore, the resin member 60 is hermetically joined to the case roughened portion 27 as a part of the hole surrounding portion 25 of the case lid member 21 over the entire circumference such that the above-described resin material 61 fills gaps between the case nanocolumns 29 standing numerously on the case roughened portion 27. That is, the resin member 60 and the case lid member 21 are hermetically sealed only at the case roughened portion 27. The resin member 60 is also hermetically joined to the top plate roughened portion 47 as a part of the hole vicinity portion 42 of the terminal member 40 over the entire circumference such that the above resin material 61 fills gaps between the terminal nanocolumns 49 standing numerously on the top plate roughened portion 47. That is, the resin member 60 and the terminal member 40 are hermetically sealed only at the top plate roughened portion 47.

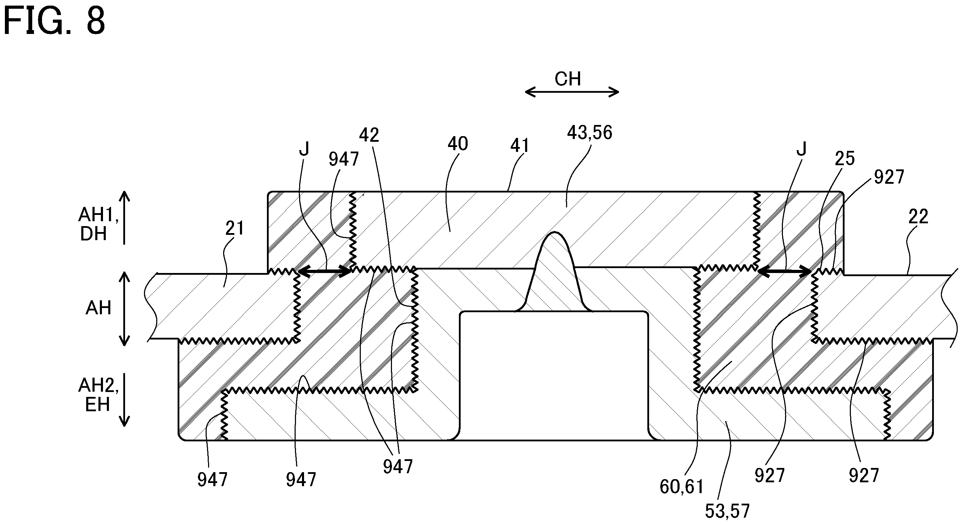

In the battery 1 of this embodiment, the case lid member 21 and the resin member 60 are hermetically sealed only at the case roughened portion 27 (see FIG. 3), rather than being hermetically sealed over the entire area of a contacting portion of these members 21, 60, i.e., over the entire hole surrounding portion 25 formed as a case roughened portion 927 as in a comparative example shown in FIG. 8. Also, the terminal member 40 and the resin member 60 are hermetically sealed only at the top plate roughened portion 47 (see FIG. 3), rather than being hermetically sealed over the entire area of a contacting portion of these members 40, 60, i.e., over the entire hole vicinity portion 42 formed as a roughened portion 947 as shown in FIG. 8. With this arrangement, good sealing performance of the case lid member 21 and the resin member 60 and good sealing performance of the terminal member 40 and the resin member 60 can be maintained, respectively, compared to the case (see FIG. 8) where the case lid member 21 and the resin member 60 are hermetically sealed over the entire hole surrounding portion 25, and the terminal member 40 and the resin member 60 are hermetically sealed over the entire hole vicinity portion 42.

The reason may be considered as follows. As compared with the case where the entire hole surrounding portion 25 of the case lid member 21 and the entire hole vicinity portion 42 of the terminal member 40 provide hermetic seals, the stress generated in the resin member 60 during a cold-heat cycle test, for example, can be reduced when only the case roughened portion 27 and only the top plate roughened portion 47 provide hermetic seals. Furthermore, in the battery 1, the case roughened portion 27 and the top plate roughened portion 47 are spaced apart from each other. Specifically, the distance indicated by arrow "P" in FIG. 3 is longer than the distance indicated by arrow "J" in FIG. 8; therefore, the stress generated in a region 60g of the resin member 60 located between the case roughened portion 27 and the top plate roughened portion 47 is smaller in the battery 1 of this embodiment. Thus, cracking is less likely or unlikely to occur in the seal portion of the case roughened portion 27 and the resin member 60 and the seal portion of the top plate roughened portion 47 and the resin member 60, and good sealing performance can be maintained.

Furthermore, in this embodiment, the case roughened portion 27 of the case lid member 21 is formed as a nano-level roughened portion on which the case nanocolumns 29 stand together in large numbers, and the resin member 60 is hermetically joined to the case roughened portion 27 with the resin material 61 filling gaps between the case nanocolumns 29 standing numerously. Thus, the sealing performance and joining strength of the case lid member 21 and the resin member 60 can be made particularly high. Also, the top plate roughened portion 47 of the terminal member 40 is formed as a nano-level roughened portion on which the terminal nanocolumns 49 stand together in large numbers, and the resin member 60 is hermetically joined to the top plate roughened portion 47 with the resin material 61 filling gaps between the terminal nanocolumns 49 standing numerously. Thus, the sealing performance and joining strength of the terminal member 40 and the resin member 60 are also made particularly high.

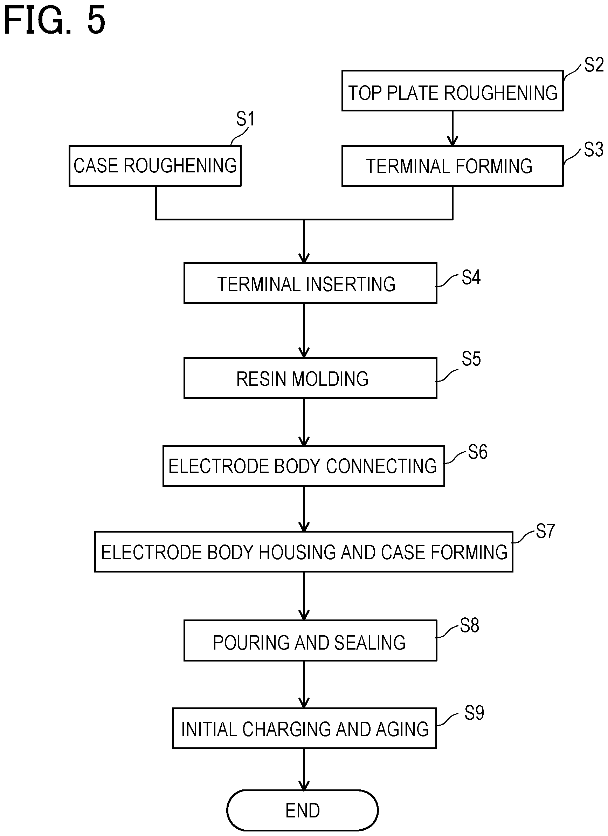

Next, a method of manufacturing the battery 1 described above will be described (see FIG. 5 through FIG. 7). First, in a case roughening step S1 (see FIG. 5), a case lid member 21Z before roughening is prepared, and the case roughened portion 27 is formed by applying surface roughening to the case lid member 21Z (see FIG. 6). In this embodiment, a pulsed laser beam LB is intermittently applied to the hole surrounding inner portion 26 of the hole surrounding portion 25 as a part of the case surface 22 of the case lid member 21Z while shifting the irradiation position, to form the case roughened portion 27 in which numerous bowl-shaped recesses 28 on which the case nanocolumns 29 stand numerously are arranged while partially overlapping. The irradiation conditions of the laser beam are set as follows: the wavelength is 1064 nm, the peak power is 5 kW, the pulse width is 150 ns, the pitch pb is 75 µm, and the spot diameter is 80 µm.

In the portion of the case lid member 21Z which is irradiated with the pulsed laser beam LB, metal (specifically, aluminum) near the case surface 22 melts and further turns into vapor. As the temperature of the vapor then decreases, the vapor turns into the particles 29p of aluminum and aluminum oxide, which are then deposited on the bowl-shaped recesses 28. By intermittently applying the pulsed laser beam LB to the case lid member 21Z while shifting the irradiation position, the particles 29p are deposited and joined together like strings of beads into the form of columns, to form the case nanocolumns 29 standing together in large numbers (see FIG. 6 and FIG. 4).

Meanwhile, in a top plate roughening step S2 (see FIG. 5), positive and negative top plate members 56Z before roughening are prepared, and the top plate roughened portions 47 are respectively formed by applying surface roughening to the respective top plate members 56Z. In this embodiment, a pulsed laser beam LB is intermittently applied to a peripheral portion of the top plate rear surface 45 of the top plate member 56Z while shifting the irradiation position, to form the top plate roughened portion 47 in which numerous bowl-shaped recesses 48 on which the terminal nanocolumns 49 stand numerously are arranged while partially overlapping (see FIG. 6). The irradiation conditions of the laser beam for the top plate member 56Z of the positive electrode made of aluminum are the same as those in the case roughening step S1. On the other hand, the irradiation conditions of the laser beam for the top plate member 56Z of the negative electrode made of copper are set as follows: the wavelength is 1064 nm, the peak power is 20 kW, the pulse width is 50 ns, the pitch pb is 60 µm, and the spot diameter is 75 µm.

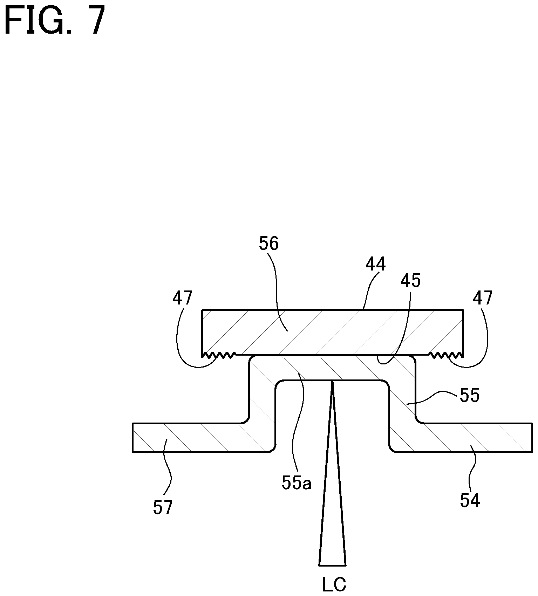

Then, in a terminal forming step S3 (see FIG. 5), positive and negative extension members 57 are prepared, and each of the extension members 57 and the corresponding top plate member 56 provided with the top plate roughened portion 47 described above are welded together, to form the positive and negative terminal members 40, respectively (see FIG. 7). More specifically, the upper bottom portion 55a of the inside-hole located portion 55 of the extension member 57 is brought into abutment with the top plate rear surface 45 of the top plate member 56. Then, a laser beam LC is applied from the extension member 57 side to the top plate member 56 side (from the lower side to the upper side in FIG. 7), toward the middle of the rear surface of the upper bottom portion 55a of the inside-hole located portion 55 of the extension member 57, so that the upper bottom portion 55a of the extension member 57 is welded to the top plate member 56, to form the terminal member 40 in which the extension member 57 and the top plate member 56 are integrated. In this embodiment, since the case lid member 21 is not present during formation of the terminal member 40, the terminal member 40 can be easily formed without interfering with the case lid member 21.

Then, in a terminal inserting step S4 (see FIG. 5), the positive and negative terminal members 40 are inserted through a pair of insertion holes 21h of the case lid member 21. Specifically, with the use of a molding die (not shown) having an upper die and a lower die, the positive and negative terminal members 40 and the case lid member 21 are placed at predetermined positions of the lower die, and the positive and negative terminal members 40 are respectively inserted through the insertion holes 21h of the case lid member 21. Then, the upper die is moved toward the lower die, so that the molding die is closed.

Then, in a resin molding step S5 (see FIG. 5), in a condition where the positive and negative terminal members 40 are respectively inserted through the pair of insertion holes 21h of the case lid member 21, a pair of resin members 60 contacting the case lid member 21 and the positive and negative terminal members 40 is insert-molded. Specifically, the molten resin of the resin material 61 is injected into each cavity (not shown), so that the cavity is filled with the molten resin. At this time, the molten resin of the resin material 61 fills gaps between the case nanocolumns 29 standing numerously on the case roughened portion 27 of the case lid member 21 and gaps between the terminal nanocolumns 49 standing numerously on the top plate roughened portion 47 of the terminal member 40 (FIG. 4). Then, the pair of resin members 60 is molded each of which contacts the hole surrounding portion 25 of the case lid member 21 while being hermetically joined to the case roughened portion 27 of the case lid member 21 and also contacts the hole vicinity portion 42 of the terminal member 40 while being hermetically joined to the top plate roughened portion 47 of the terminal member 40. Then, a lid assembly (not shown) in which the positive and negative terminal members 40 are fixed to the case lid member 21 via the resin members 60 is removed from the molding die.

Then, in an electrode body connecting step S6 (see FIG. 5), the electrode body 30 obtained by stacking the positive electrode sheets 31, negative electrode sheets 32, and separators 33 is prepared, and the positive current collector 30c of the electrode body 30 is welded to the main body portion 54 of the terminal extension 53 of the terminal member 40 of the positive electrode. Also, the negative current collector 30d of the electrode body 30 is welded to the main body portion 54 of the terminal extension 53 of the terminal member 40 of the negative electrode. The electrode body 30 is then wrapped with the bag-like insulating holder 7.

Then, in an electrode body housing and case forming step S7, the case body 11 is prepared, the electrode body 30 covered with the insulating holder 7 is inserted into the case body 11, and the opening portion 11c of the case body 11 is closed with the case lid member 21. Then, the opening portion 11c of the case body 11 and the peripheral portion 21f of the case lid member 21 are laser welded hermetically over the entire circumference to form the case 10.

Then, in a pouring and sealing step S8, the electrolyte 5 is poured into the case 10 through the liquid inlet 21k, so that the electrode body 30 is impregnated with the electrolyte 5. Then, the liquid inlet 21k is hermetically sealed with the sealing member 15.

Then, in an initial charging and aging step S9, initial charging is performed on the battery 1. Then, the battery 1 is left to stand for a predetermined time so that the battery 1 is aged. In this manner, the battery 1 is completed.

In the method of manufacturing the battery 1 of this embodiment, before the terminal member 40 is formed by welding the top plate member 56 and the extension member 57 together, the top plate roughened portion 47 is formed by applying surface roughening to the top plate member 56, as described above. Therefore, the terminal extension 53 is not present during formation of the top plate roughened portion 47, and the top plate roughened portion 47 can be easily formed without interfering with the terminal extension 53. Also, prior to the resin molding step S5, the case lid member 21 is formed with the case roughened portion 27, and the terminal member 40 is formed with the top plate roughened portion 47; therefore, in the resin molding step S5, the resin member 60 hermetically joined to the case roughened portion 27 and the top plate roughened portion 47 due to the anchor effect can be easily molded.

Furthermore, in this embodiment, the pulsed laser beam LB is applied to the case lid member 21Z before roughening in the case roughening step S1, to form the case roughened portion 27 on which the case nanocolumns 29 stand numerously. Thus, the nano-level case roughened portion 27 can be easily provided. Also, in the top plate roughening step S2, the pulsed laser beam LB is applied to the top plate member 56Z before roughening to form the top plate roughened portion 47 on which the terminal nanocolumns 49 stand numerously. Thus, the nano-level top plate roughened portion 47 can be easily provided. Then, in the resin molding step S5, the resin member 60 is molded such that the resin material 61 fills gaps between the case nanocolumns 29 standing numerously on the case roughened portion 27, and the resin material 61 fills gaps between the terminal nanocolumns 49 standing numerously on the top plate roughened portion 47. Thus, the sealing performance and joining strength of the resin member 60 and the case lid member 21 and those of the resin member 60 and the terminal member 40 can be made particularly high.

In this embodiment, after the terminal member 40 is formed in the terminal forming step S3, the terminal inserting step S4 is carried out in which the terminal member 40 is inserted through the insertion hole 21h of the case lid member 21. However, the disclosure is not limited to this, but the formation of the terminal member 40 and the insertion of the terminal member 40 through the insertion hole 21h may be performed at the same time. That is, in the terminal forming step S3, in a condition where the inside-hole located portion 55 of the extension member 57 is placed in the insertion hole 21h of the case lid member 21, the inside-hole located portion 55 and the top plate member 56 may be welded together. In this case, the terminal inserting step S4 is not necessary. Thus, the resin molding step S5 is carried out after the terminal forming step S3.

While the disclosure has been described in the light of the embodiment, it is to be understood that the disclosure is not limited to the embodiment, but may be applied by making changes as needed, without departing from the principle of the disclosure.

### Reference Signs List

- 1: Battery (Power storage device)
- 10: Case
- 21: Case lid member (Case member)
- 21Z: Case lid member (before roughening)
- 21h: Insertion hole
- 24: Case inner surface
- 27: Case roughened portion
- 29: Case nanocolumn
- 29p: Particle (forming case nanocolumn)
- 30: Electrode body
- 40: Terminal member
- 43: Terminal top plate
- 45: Top plate rear surface
- 47: Top plate roughened portion
- 49: Terminal nanocolumn
- 49p: Particle (forming terminal nanocolumn)
- 53: Terminal extension
- 56: Top plate member
- 56Z: Top plate member (before roughening)
- 57: Extension member
- 60: Resin member
- 61: Resin material (forming resin member)
- DH: Outside (of case lid member)
- EH: Inside (of case lid member)
- ha: Height (of nanocolumn)
- LB: Pulsed laser beam
- S1: Case roughening step
- S2: Top plate roughening step
- S3: Terminal forming step
- S4: Terminal inserting step
- S5: Resin molding step

## Claims

1. A power storage device (1) comprising:
a case member (21) having an insertion hole (21h);
a terminal member (40) inserted through the insertion hole of the case member; and
a resin member (60) that contacts the case member and the terminal member while insulating the case member and the terminal member from each other, to fix the terminal member to the case member,
wherein the terminal member has a terminal top plate (43) in the form of a plate located on the outside (DH) of the case member, and a terminal extension (53) that extends from the terminal top plate toward the inside (EH) of the case member and passes through the insertion hole and the resin member,
wherein the terminal top plate includes a top plate roughened portion (47) that is formed in the shape of an encircling band over the entire circumference of the terminal top plate on a top plate rear surface (45) facing the case member side and is subjected to surface roughening, and the terminal member and the resin member are hermetically sealed only at the top plate roughened portion, and
wherein the case member includes a case roughened portion (27) that is formed in the shape of an encircling band over the entire circumference of the insertion hole on a case inner surface (24) facing the inside and is subjected to surface roughening, and the case member and the resin member are hermetically sealed only at the case roughened portion.

2. The power storage device (1) according to claim 1, wherein:
case nanocolumns (29) formed by joining particles (29p) derived from metal that forms the case member (21) together like strings of beads into the form of columns and having a height (ha) of 50 nm or more stand numerously on the case roughened portion (27);
terminal nanocolumns (49) formed by joining particles (49p) derived from metal that forms the terminal member (40) together like strings of beads into the form of columns and having a height of 50 nm or more stand numerously on the top plate roughened portion (47);
the resin member (60) is hermetically joined to the case roughened portion such that a resin material (61) that forms the resin member fills gaps between the case nanocolumns standing numerously; and
the resin member is hermetically joined to the top plate roughened portion such that the resin material fills gaps between the terminal nanocolumns standing numerously.

3. A method of manufacturing a power storage device (1) including a case member (21) having an insertion hole (21h), a terminal member (40) inserted through the insertion hole of the case member, and a resin member (60) that contacts the case member and the terminal member while insulating the case member and the terminal member from each other, to fix the terminal member to the case member, wherein the terminal member has a terminal top plate (43) in the form of a plate located on the outside (DH) of the case member, and a terminal extension (53) that extends from the terminal top plate toward the inside (EH) of the case member and passes through the insertion hole and the resin member, wherein the terminal top plate includes a top plate roughened portion (47) that is formed in the shape of an encircling band over the entire circumference of the terminal top plate on a top plate rear surface (45) facing the case member side and is subjected to surface roughening, and the terminal member and the resin member are hermetically sealed only at the top plate roughened portion, and wherein the case member includes a case roughened portion (27) that is formed in the shape of an encircling band over the entire circumference of the insertion hole on a case inner surface (24) facing the inside and is subjected to surface roughening, and the case member and the resin member are hermetically sealed only at the case roughened portion, the method comprising:
forming (S1) the case roughened portion by applying surface roughening to a case member (21Z) before roughening;
forming (S3) the terminal member (40) by welding a top plate member (56) that provides the terminal top plate (43) and an extension member (57) that provides the terminal extension (53) together;
forming (S2) the top plate roughened portion (47) by applying surface roughening to a top plate member (56Z) before roughening before forming the terminal member; and
molding (S5) the resin member hermetically joined to the case roughened portion and the top plate roughened portion in a condition where the terminal member is inserted through the insertion hole of the case member.

4. The method of manufacturing the power storage device (1) according to claim 3, wherein:
case nanocolumns (29) formed by joining particles (29p) derived from metal that forms the case member (21) together like strings of beads into the form of columns and having a height of 50 nm or more stand numerously on the case roughened portion (27);
terminal nanocolumns (49) formed by joining particles (49p) derived from metal that forms the terminal member (40) together like strings of beads into the form of columns and having a height (ha) of 50 nm or more stand numerously on the top plate roughened portion (47);
the resin member (60) is hermetically joined to the case roughened portion such that a resin material (61) that forms the resin member fills gaps between the case nanocolumns standing numerously;
the resin member is hermetically joined to the top plate roughened portion such that the resin material fills gaps between the terminal nanocolumns standing numerously;
forming (S1) the case roughened portion (27) comprises forming the case roughened portion on which the case nanocolumns (29) stand numerously by intermittently applying a pulsed laser beam (LB) to the case member (21Z) before roughening while shifting an irradiation position;
forming (S2) the top plate roughened portion (47) comprises forming the top plate roughened portion on which the terminal nanocolumns (49) stand numerously by intermittently applying a pulsed laser beam to the top plate member (56Z) before roughening while shifting an irradiation position; and
molding (S5) the resin member comprises molding the resin member while filling gaps between the case nanocolumns standing numerously on the case roughened portion with the resin material and filling gaps between the terminal nanocolumns standing numerously on the top plate roughened portion with the resin material.
